# EUROPEAN PATENT APPLICATION

(11) **EP 0 893 051 A1**
(43) Date of publication of application: **27.01.1999**
(21) Application number: 98305769.6
(22) Date of filing: 20.07.1998
(51) Int. Cl.: A01D 82/00, A01D 78/10

(54) **Apparatus and method for treating crops**

(30) Priority: 26.07.1997 GB 9715746; 06.03.1998 GB 9804667
(71) Applicant: KLINNER, Wilfred Erwin, Woburn Sands, Milton Keynes, Buckinghamshire MK17 8TN (GB)
(72) Inventor: KLINNER, Wilfred Erwin, Woburn Sands, Milton Keynes, Buckinghamshire MK17 8TN (GB)

(57) **Abstract**

Apparatus for treating and/or moving cut crop comprises primarily one or more rotors (3) mounted to be driven in a mobile support structure. Attached to the rotor core member or structure (2) are outwardly extending elongate crop engaging elements (1). Each such element comprises a wide outer, generally planar crop engaging head portion (9), an inner mounting portion (6) for attachment to the rotor core member or structure, and an intermediate stem portion (8) which is dimensioned to be less wide than head portion (9) to allow preferential yielding to take place when exceptionally high loads are imposed on the head portion by crop bulk and/or by foreign objects entrained in the crop or lying on the ground. The elements may be mounted on cylindrical and circular rotors for rotation respectively in the vertical plane and in generally horizontal planes. Cylindrical rotors may be combined with a mower (20) to form a mower-conditioner.

## Description

The present invention relates to apparatus for, and a method of, treating and moving crops. It is concerned in one respect with treating crop cut by a mower before the crop falls to the ground and with forming the treated crop into swaths or spreading it, in a second respect with engaging cut crop lying on the ground for moving it, and in a third respect with collecting cut crop from the ground for harvesting it.

Crop collecting and treatment devices employing horizontally disposed high-speed cylindrical rotors comprising outwardly extending planar crop engaging elements have been disclosed previously, in several forms by the present inventor, particularly in UK Patents GB 2117214, GB 2130864, and GB 2161687.

It is a primary object of such devices to condition crop, which is to modify the surface of forage plants, especially the cuticle, by mechanical actions which may include bending, scuffing and bruising. In consequence of these forms of treatment, cell moisture in the plants moves more easily to the surface and evaporates more rapidly to atmosphere, hastening drying of the crop mass in preparation for harvesting it as hay or silage. It is a further object of such devices during secondary operations to lift and loosen the layer of crop lying on the ground so that drying air can pass between cut plants more freely. A yet further object of such devices is to collect cut crop from the ground and to feed it into a harvesting machine.

In known examples of such devices, the crop engaging elements are arranged on a rotor core in transverse arrays so that the crop-facing surfaces lie normal or at an angle to the transverse rotor axis. The outer crop engaging regions are predominantly narrower than the mounting and intermediate regions, so that the elements tend to comb through the crop stream, requiring lateral spacing to be close if adequately severe and uniform treatment is to be achieved, especially in sparse and/or mature crops.

Alternative, long-established V-form conditioning elements present to the crop long and only narrow outwardly extending edges. In order to minimise the extent of crop hair-pinning around individual arms and ensure effective treatment, close spacing of elements is also required. Such elements have proved durable only when made of steel; however, if metal components should become lost during operation, they subsequently present hazards when picked up by harvesting machinery. In that respect plastic V-form elements are preferable, but they can break too frequently in use, especially when they are mounted rigidly in the direction of rotor rotation, as is usual.

Also disclosed previously by the present inventor are pointed, radially arrow-headed planar teeth mounted on horizontally disposed cylindrical rotors for combing through uncut crop in order to strip off seeds and other wanted plant parts without cutting the crop, for example in GB 2176685 and GB EP 0340229. In PCT WO/89/11784 are additionally disclosed combing teeth for stripping seeds and other wanted parts off uncut plants in similar manner, but the teeth comprise each a broad outer head portion which is wedge-shaped in the direction of rotor rotation and is supported on an inwardly adjacent narrower stem portion. Like known crop engaging elements for conditioning cut forage plants, the teeth for stripping off wanted parts from uncut crop are shaped to divide the crop mass by splitting it into narrow strips and to pass between plants with a rubbing action in the general direction of normal plant alignment.

Well known from the prior art also are devices comprising one or more circular rotors rotating at more modest speeds about upright axes for the purpose of moving crop lying on the ground, which is to say tedding, spreading or raking it into rows. Each rotor has attached to its driven centre a series of horizontally or near-horizontally extending arms at the outer ends of which are mounted downwardly extending spring-wire tines. Such devices for tedding or spreading crop usually comprise several laterally adjacent, relatively small-diameter rotors with rigid arms which have an operating plane that is inclined slightly to the horizontal so that crop is engaged only during part of each rotor rotation. The spreading effect can be adjusted.

For raking up spread crop or combining small swaths into windrows, larger-diameter single- or twin-rotor devices are commonly employed. Each circular rotor has numerous, generally horizontal tine arms also carrying spring-wire tines, each arm being arranged to be rotated through around 90° about its longitudinal axis in such a way that the tines point downward to gather the crop through approximately half the operating circle and are then lifted clear by pivoting to pass over the accumulated crop row before being lowered again to gather more crop. Usually provided are baffles or guides to control the extent to which the crop is thrown sideways.

Because frequent ground contact of tines cannot be avoided with circular rotor devices, especially on undulating ground, tine breakage is common and the risk is great of lost metal tines being picked up subsequently and damaging harvesting machinery. Moreover, because the spring-wire tines are narrow and spaced fairly widely apart laterally, particularly short crop can pass between them and become irretrievably separated out. Heavy, long crop can wrap around the tines and be carried round too far or be deposited untidily.

The problems with circular rotor devices can be expected to be minimal when, in place of wire tines, broader crop engaging components like flat spokes made of resilient plastics material are provided which present outer edges generally parallel to the ground and which are spaced apart so that during movement over the ground the crop bridges across the spaces between spokes unable to pass or to become trapped.

Severely bruising crop stems and leaves transversely to their longitudinal extent can result in high levels of effectiveness of conditioning and fast crop drying. This form of treatment can be brought about by localised crushing pressure as provided by known profiled, intermeshing rollers between which the crop is guided to pass. However, it has been found that a similar effect can be applied mainly to the thick lower crop stems, which are in greatest need of conditioning, by using horizontally disposed, high-speed conditioning rotors of cylindrical configuration comprising outwardly extending, elongate crop engaging elements provided with wide outer portions.

Generally, it should be advantageous to provide crop conditioning elements which act on the crop over a broad front, causing lateral bruising of the plants by impact with outer edges, and additionally causing longitudinal scuffing due to crop slipping over the edges in the outer region during acceleration. Such construction should allow the number of elements required for treating the crop mass to be kept small and should provide good impelling of the treated material and low risk of causing crop fragmentation.

It should be further advantageous in conditioning devices to guide and retard the crop stream by adjustable, spring-biased deflector means so that during acceleration the material is forced into selectably close rubbing contact with the elements, and so that mechanical damage from foreign objects entrained in the crop is prevented with greater certainty by the ability of the deflector means to move momentarily away from the elements.

It should be yet further advantageous to form crop engaging elements of resilient material and to shape them so that yielding in response to exceptionally high tip loads takes place in pre-determined regions away from the crop engaging outer ends, also that broad crop engaging head portions are provided with a degree of lateral flexibility. This should be advantageous also in the context of devices comprising circular rotors with upright axes. Because contact with the ground or with a foreign object can occur across the full width of a crop engaging element, the whole of the element should be capable of yielding to avoid damage. However, when, for example, a heavy stone is encountered off-centre, it is desirable that only a part of an element yields at least to some extent whilst the other parts continue to perform their function effectively.

It is among the objects of the present invention to provide apparatus for, and a method of, conditioning and moving cut plant material more advantageously, as described generally in the foregoing, employing devices comprising cylindrical rotors disposed horizontally transverse to the direction of forward travel. Particular objects of the invention include effectively conditioning, impelling and restructuring such cut material with rotors constructed to be simple, light and cost-effective, employing few crop engaging elements, each element being of substantial working width and, if lost, is non-damaging to following harvesting machinery.

It is also among the objects of the present invention to provide improved performance and durability for devices comprising circular rotors with upright axes for moving and raking up plant material substantially in the horizontal plane, also as described in the foregoing. In particular the present invention aims to save unproductive time, operating expense, crop loss during raking, and damage from lost wire tines to subsequently used harvesting machinery.

For brevity, the two types of device will be distinguished between in the following simply by reference to their rotor configuration, that is cylindrical or circular. The terms 'outwardly' and 'inwardly' should be taken to mean respectively: away from and towards the mounting means for the crop engaging elements on the rotor.

The present invention is concerned primarily but not exclusively with resilient elongate crop engaging elements each comprising: a generally planar head portion in the outer crop engaging region, a foot or mounting portion for attachment to driven means in the inner region, and a stem or joining portion in the intermediate region where yielding can take place in response to high crop loads and to heavy foreign objects entrained in the crop or engaged on the ground.

According to one aspect of the present invention there is provided apparatus for treating and/or moving cut crop, comprising: a mobile support structure for movement over the ground; one or more rotors mounted for rotation relative to the support structure, each rotor comprising a core member or structure and a plurality of elongate crop engaging elements made of resilient material and secured fixedly to mounting means on the core member or structure by fastening means; drive means for driving each rotor in rotation to engage the crop; and means for controlling crop placement on the ground; characterised in that at least some of said elongate crop engaging elements each comprises a head portion in the outer crop engaging region, a mounting portion for attachment to driven means in the inner region, and a joining stem portion in the intermediate region, at least the outer crop facing region of said head portion being generally planar and wider than said inwardly adjoining stem portion and being aligned to engage the crop substantially broad-ways on in the direction of rotation of each rotor.

According to another aspect of the invention there is provided a method of treating and/or moving cut crop comprising the steps of: moving through the crop an apparatus according to one aspect of the invention whilst driving one or more rotors for rotation relative to said support structure; moving a plurality of elongate crop engaging elements made of resilient material; engaging the crop with said elements in the direction of movement of the elements; and treating and/or moving the crop by interaction with said elements at least some of which comprise a head portion that is generally planar at least in the outer crop engaging region, is wider than an inwardly adjoining stem portion and is aligned to engage the crop substantially broad-ways on.

The present invention finds application mainly in pulled and front- or rear-mounted tractor-operated machines used in the conservation of grass and the harvesting of crops and in the management of amenity areas.

In a first application embodiments of the present invention comprise cylindrical rotors, each rotor being combined with a mower in known manner to form a mower-conditioner. In such a device the crop is first cut by established means, for example a reciprocating cutterbar but more usually by high-speed disc or drum mowers. It is then immediately engaged by the rotor and subjected to physical treatment aimed to accelerate the rate of moisture loss during subsequent drying. A guide cover over the rotor directs the crop on to the ground at the rear.

In a second application embodiments of the invention also comprise cylindrical rotors but without a mower present. They serve to lift and loosen cut crop and return it to the ground to enhance drying further, or to pick up and feed cut crop into a harvesting machine such as a forage harvester, baler or combine-harvester, all of known construction.

In a third application embodiments of the invention comprising circular rotors serve to restructure cut crop lying on the ground by teasing it out and spreading it laterally, or to rake it into swaths or windrows. Such restructuring of the crop as it lies in the field also accelerates the drying process, and forming crop into swaths or windrows prepares it for harvesting.

Conditioning of cut crop with cylindrical rotors of the present invention takes place first by causing generally transverse bruising on impact with edges in the outer region of the head portion of each crop engaging element and also as a result of abrasive crop slip occurring relative to the edges whilst the plant material is being accelerated and moved against frictional resistance of the rotor cover which guides the crop on to the ground at the rear.

Conveniently, frictional resistance may be optionally increased by provision of an adjustable deflector comprising one or more flaps located in the passage between the rotor and the rotor cover. It serves to retard the crop and direct it on to the tip envelope of the crop engaging elements. Thus, where severe conditioning of cut crop is required, the rotor is driven at high peripheral speed and the resistance offered by the crop deflector is arranged to be high.

Preferably, the operative edge region of the crop deflector is profiled. Preferably also, the deflector is provided with spring means to urge it against adjustable stops but allowing it to pivot momentarily back from the stops away from the conditioning elements under excessive load conditions.

Conditioning severity due to crop slip may be increased by reclining the crop engaging elements relative to the direction of rotor rotation. This arrangement and method of use also reduces the fan effect of the rotor, reduces the angular deflection required of the elements to allow a foreign object to pass and assists resilient elements after deflection to regain their operating positions.

Conditioning severity may be affected also by fashioning the head portion of crop engaging elements in such a way that at least the outer region forms a plane which is curved scoop-like so that the sides lead the centre. During rotation the sides then enter the crop stream first, counteracting the tendency for some plant material to escape laterally. After passing the front-dead-centre position of the rotor, the curved region comes into prominence, urging the material sideways away from the centre. Thus, a degree of lateral movement is added to longitudinal slip.

Conveniently, the rotor core is a hollow member or a fabricated structure and is provided with means, such as ribs or brackets, for mounting the crop engaging elements and securing them by fastening means. Optionally, provision may be made for varying the mounting angle of the transverse plane of the head portion of the elements relative to a plane containing the rotor axis, to vary the severity of treatment and the direction in which the crop is expelled.

Conveniently, the crop engaging elements may be made of plastics material, of composite materials like carbon fibre, or of combinations of synthetic and natural materials. Important physical characteristics include: good impact, wear and fatigue resistance with sufficient hardness in the outer crop engaging head portion to ensure durability and to cause bruising and abrasion of the plant material, complemented by sufficient yielding ability to allow the elements to bend without breaking in overload situations and to return to their normal operating positions primarily due to the stiffness of the material.

Conveniently, the yielding characteristics of the stem portion of each element may be adapted to operating requirements by the choice of material and by appropriately dimensioning the length, width, thickness and cross-sectional shape of the stems. Preferred regions of yielding may be provided by locally varying relevant parameters.

Conveniently, crop engaging elements of the present invention are substantially planar at least in the outer region of the head portion which is wider than the adjacent region of the intermediate stem portion. The elements may be fabricated or moulded to provide different outer edge profiles.

Optionally, the head portion may be divided into two or more sections by deep inwardly extending incisions, or by deep recesses dimensioned to prevent detrimental lodging of crop, in order to provide additional flexibility in the head portion for better absorption of shock loads through impact with foreign objects or the ground.

Generally, the present invention finds application in the cutting, treating, moving and harvesting of grass and other crops and of plant residues like cereal straw.

The present invention offers the advantages of effective crop treatment of selectable severity, of protection against impact damage from foreign objects entrained in the crop or lying on the ground, of reduced losses, of effective crop delivery rearward and/or sideways, of high work rates and of low maintenance costs.

Embodiments of the present invention will now be described by way of example with reference to the accompanying drawings in which:-
Figure 1 is a diagrammatic cross-sectional side elevation of an apparatus embodying the invention for conditioning crop in combination with a mower;
Figure 2 is a diagrammatic cross-sectional side elevation of an apparatus embodying the invention for treating, restructuring or picking up crop lying on the ground;
Figure 3 is a front elevation of a representative crop engaging element according to the invention;
Figure 4 is a front elevation of an alternative crop engaging element according to the invention;
Figure 5 is a side elevation of the elements in Figures 3 and 4;
Figure 6 is a diagrammatic cross-sectional side elevation of an apparatus embodying the invention for raking up crop lying on the ground;
Figures 7 and 8 are front elevations of alternative crop engaging elements according to the invention.

Throughout this specification corresponding components of the various arrangements have been given identical reference numerals. For brevity and simplicity the functions and inter-relationships between the various components are described and explained only when they are first mentioned and not fully in respect of each subsequent figure. Thus, it is to be appreciated that each time corresponding components with identical reference numerals are referred to, the appropriate description applies.

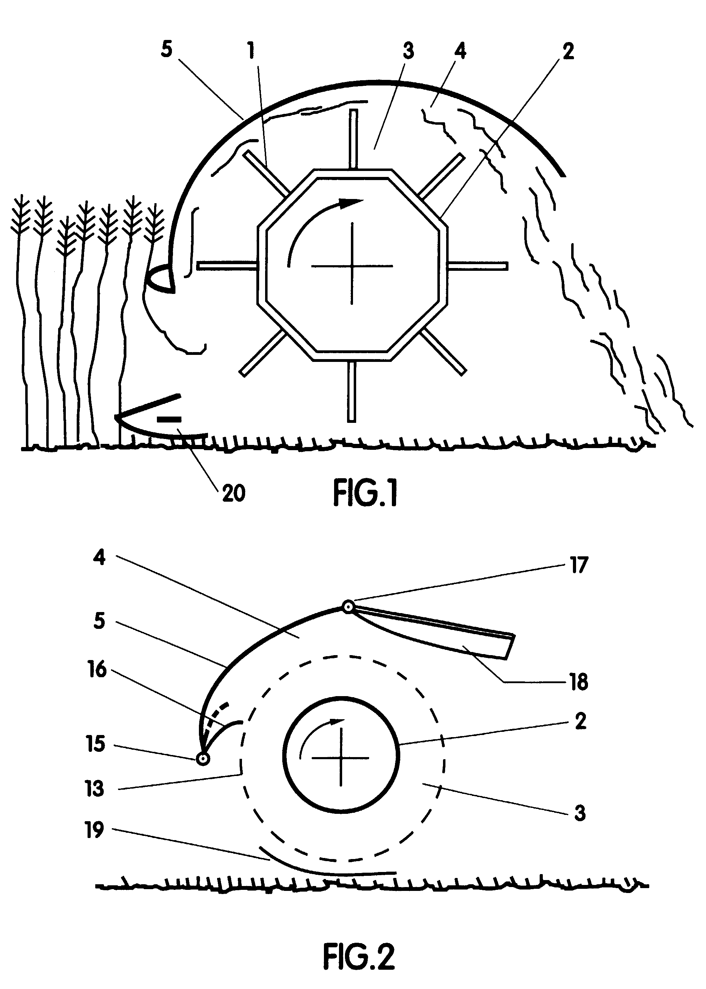

Referring first to Figure 1, there are shown in cross-sectional side elevation the principal components of an apparatus embodying the invention for treating crop in conjunction with a mower.

A hollow rotor core 2 has attached to its periphery by axial or tangential or other fastening means (not shown) transverse arrays of crop engaging elements 1, in combination forming a cylindrical rotor generally indicated at 3. A top cover 5 for guiding the crop extends from below the front-dead-centre position of rotor 3 to beyond the top-dead-centre position, defining beneath it a crop flow passage 4. Preceding rotor 3 near the ground is shown in cross-sectional diagrammatic representation a reciprocating cutterbar 20 for severing the crop.

In preferred embodiments of the invention the apparatus may be mounted in a mobile support structure (not shown) for convenient attachment to an agricultural tractor or other prime mover. The drive (not shown) to the rotor and mower may be taken in known manner from the tractor power take-off through conventional drive line arrangements.

In operation, as the apparatus shown in Figure 1 is moved over the ground, mower 20 cuts the crop stems near their base, freeing them to be engaged in rapid succession by the outer edges of the head portions of passing elements 1. The severity of conditioning imparted to the crop is dependent on the tip speeds of elements 1, but also on the angle of incidence with the crop and on the amount of subsequent crop slip over the outer edges, as determined mainly by the inclination of elements 1 relative to a radial plane containing the rotor axis, by the outer edge profile of elements 1 and by the resistance to crop flow in passage 4. Generally, the higher the tip speed, the more severe will be the treatment effect.

Optionally, the fore-and-aft position of rotor 3 may be so adjusted that some or all of the crop is engaged by elements 1 fractionally before and immediately it is cut. In this way the severity of conditioning can be substantially increased.

The apparatus shown in Figure 1 without a mower present finds application as a pick-up conditioner or swath or windrow tedder/aerator. By way of example, Figure 2 shows a cross-sectional diagrammatic side elevation of one possible tedder/aerator arrangement. The tip circle of crop engaging elements 1 is shown in broken outline at 13. An optional skid 19, alternatively a wheel, attached in known manner to each rotor housing side plate (not shown) prevents rotor 3 from striking the ground. At the front, rotor cover 5 is provided with a stiffening member 15. An optional, angularly adjustable crop deflector 16 may be pivotally attached to member 15, or it may extend into crop flow passage 4 from another point along the underside of rotor cover 5. The deflector may be a flat or curved or crimped plate which is preferably spring-loaded against adjustable stops in such a way that, in response to excessive loads, it can momentarily move away from its set distance relative to rotor periphery 13, to allow a lump of crop or a foreign object to pass. Preferably, for most crops deflector 16 has a crop engaging edge which is serrated or otherwise profiled to increase its retarding and abrading capability. For some purposes deflector 16 may be removed, or it may be locked out to render it inoperative.

Placement of treated crop on to the ground is determined by the features at the rear of rotor cover 4. By way of example, ahead of, above, or behind the rotor top-dead-centre position there may be provided on rotor cover 4 a transverse pivot arrangement 17 to allow the angular position of an end section 18 to be varied. Preferably, end section 18 is provided with two or more downwardly extending, laterally adjustable fins for guiding the treated crop optionally to be deposited in swaths of selectable width or to be spread to one or both sides so as to cover most or all of the ground.

The apparatus shown in Figure 2, usually without crop deflector 16 and end section 18, can find further application as a pick-up device attachable to the front of forage harvesters, balers and other harvesting machines. Should any crop engaging elements made of non-metallic material break and pass into the harvesting mechanism, there is no serious risk of damage.

It is to be appreciated that, in place of reciprocating cutterbar 20 in Figure 1, other types of mower, notably rotary drum and disc mowers, may be provided, that rotor 3 may comprise fewer or more rows of crop engaging elements than shown, and that the shape and positioning of rotor cover 5 may be varied. Additionally, crop deflector 16 in Figure 2 may be provided also on a mower-conditioner as illustrated in Figure 1, and it may comprise laterally adjacent sections or flaps each capable of yielding independently. By way of example, deflector 16 may be made of stiff but resilient plastics material divided into a number of flaps by cuts or recesses less deep than its fore-and-aft dimension, so that each flap can yield independently and no hinge or separate spring means need to be provided as for metal deflectors.

It is to be appreciated also that crop engaged at the intake region of an apparatus according to the invention detaches itself from the crop engaging elements 1 by centrifugal effect.

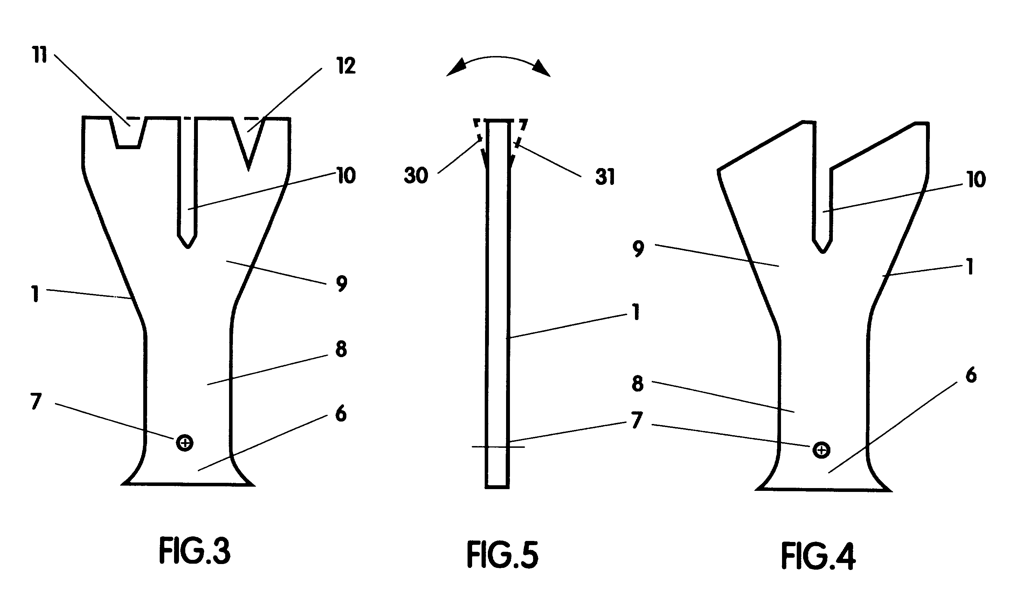

Figure 3 is a front elevation of a representative crop engaging element of the invention. At the inner region element 1 is provided with a foot portion 6 which may be broadened inwardly to provide good lateral stability. Fastening hole 7 as shown enables mounting of element 1 by tangential fastening means on to ribs or brackets (not shown) extending outwardly from rotor core 2. Radial or other fastening means may be provided optionally, including clamping means.

Stem portion 8 is parallel-sided and adapted to bend along its whole length. Conveniently, stem length, width and thickness, also cross-sectional shape, may be varied to provide the bending characteristics required for specific applications.

Head portion 9 of element 1 is substantially wider than stem portion 8. The outer crop engaging edge region may be straight or it may be concave so that the sides of head portion 9 are leading. Head portion 9 may be divided into two or more sections by deep incisions or by recesses 10 to enable individual sections to yield or twist instead of, or in addition to, stem portion 8.

The ratio of stem width to head width may vary; most preferably it lies in the range 1:1.25 to 1:4, but larger or smaller ratios of 1:>1 may be adopted. Advantageously, narrow stems allow more lateral twisting than wide stems in response to heavy offset loads, and that reduces the risk of damage further.

Preferably, the sides of head portion 9 adjacent stem portion 8 are outwardly slanted away from the centre line of element 1 at such angles that there is no tendency for crop to adhere to them.

The outer crop engaging region of head portion 9 may be provided with recesses or be otherwise notched or profiled in order to increase grip and penetration into the crop stream, particularly in stemmy crops. Advantageous shapes for notches or recesses include trapezoidal as at 11 in Figure 3, triangular as at 12 in figure 3, rectangular, and rounded. Conveniently, the shape and pitch of recesses may be adapted to produce the conditioning characteristics required for specific crops and applications.

Figure 4 is a front elevation of an alternative crop engaging element of the invention. In the example, most of the outer crop engaging edge of each head section created by narrow recess 10 is slightly slanted inwardly in the same direction. Optionally, the slanting may be arranged in opposite directions. In use, lightly slanted edges impart to the plants sufficient of the desired localised impact effect because crop alignment in the direction of rotor rotation is not usually precise. Slanted edges can cause plants of some crops to be turned sideways and to become deposited on the ground in a loosely arranged layer.

Conveniently, a degree of lateral impelling of plant material may be achieved with crop engaging elements of the present invention when they are mounted transversely angled relative to a plane containing the transverse rotor axis. Laterally angled elements are capable of being deflected through compound angles with a rearward and a lateral component.

Figure 5 is a side elevation of element 1 in Figures 3 and 4. It is shown in full outline to be of uniform thickness throughout its length, but, conveniently, the thickness may be adapted locally for specific purposes and applications. For example, tapering of the head portion so that its thickness towards the outer edge region is increased, can prolong wear and service life, and in an inner region it can be used to adapt the deflection characteristics of elements 1.

It will be appreciated that any additional material for reinforcing the outer edge region of an element 1 is to be provided in tapered form on one or both sides of head portion 9, as indicated in broken outline in Figure 5 at 30 and 31. Thus, in operation the outer edge of head portion 9 may precede the principal crop facing surface of element 1. This enhances the bruising effect on impact with the crop and may be achieved alternatively if more of the head portion, or a major part of element 1, is arranged to be forwardly inclined relative to a radial plane containing the rotor axis.

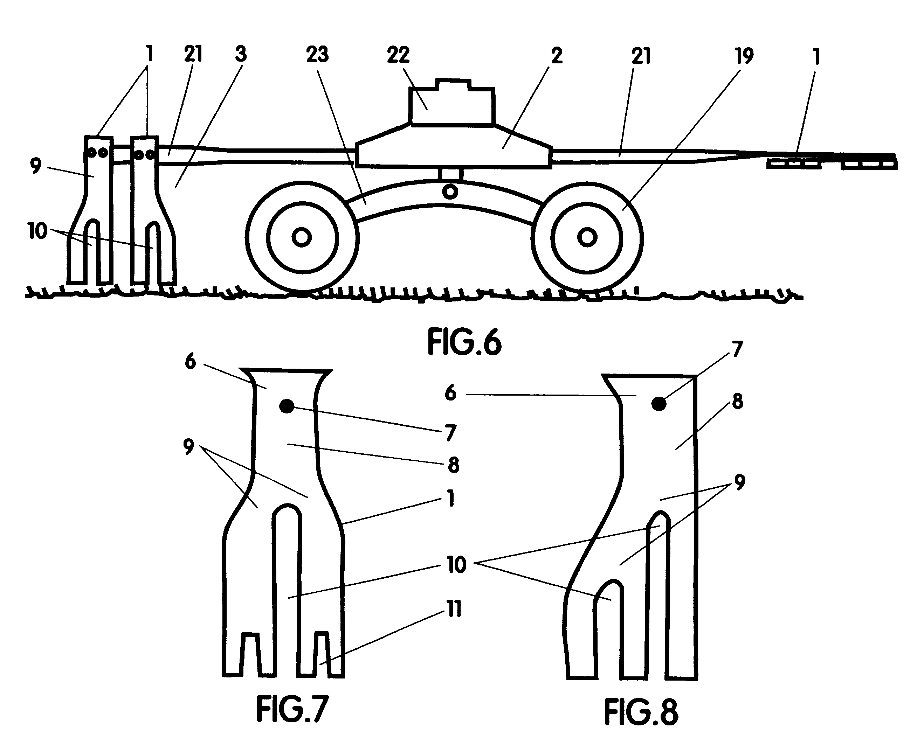

Figure 6 is a diagrammatic cross-sectional representation of a raking device comprising a single, large, circular rotor generally indicated at 3. Asymmetric crop engaging elements 1 are attached substantially normal to the outer ends of arms 21 which emanate from rotor centre 2. Rotor 3 is driven from gearbox 22 in such a way that during each rotation arms 21 are also twisted through around 90° in both directions about their longitudinal axes. The device is supported on a wheeled carriage 23.

In Figure 6 the rotor arm on the left, being one of many, is shown with a pair of mirror-image elements 1 inclined substantially normal to the field surface. Opposite on the right, arm 21 with elements 1 is shown turned through 90°. During anti-clockwise rotation between the two positions, when viewed from above, rearward pivoting of the elements in the vertical plane releases collected crop into a windrow. During continued rotation, forward pivoting of the elements causes renewed engagement with and collecting of crop so that a continuous windrow is formed.

By way of example, the mounting portions of crop engaging elements 1 in Figure 6 are secured rigidly to a flat face on rotor arms 21. Recesses 10 divide head portions 9 into flat spokes which are capable of yielding in addition to the stem portion. This provides extra safe operation whether or not an element strikes the ground or an obstruction across its full width or substantially above ground level, as sometimes happens. Whilst not essential, it is preferred that the combined width of the spokes on one element at their narrowest is greater than the width of the stem portion of the element. The width of recesses 10 should prevent passage of crop.

Figure 7 depicts in front elevation on a larger scale than in Figure 6 an alternative crop engaging element 1 which is particularly suitable for small-diameter multiple circular-rotor configurations with fixed rotor arms operating in a plane slightly inclined to the horizontal, for tedding or spreading crop. The head portion generally indicated at 9 is also divided into spokes by recess 10. Optional outer recesses 11 may be given suitable depth to contribute to yielding ability should ground contact occur.

Optionally, mounting portion 6 and/or the outer crop engaging region of head portion 9 of element 1 in Figure 7 may be laterally slanted so that the angles which the outer edges of the head portion make with the crop lie substantially parallel to the ground during the crop engaging part of the inclined operating circle.

Figure 8 is a front elevation of an alternative crop engaging element 1 which finds particular application in large-diameter circular-rotor configurations for raking up crop. The head portion generally indicated at 9 is divided into three flat spokes of different length by recesses 10 to provide, particularly on undulating ground, good lateral flexibility for the wide elements. Pairs of asymmetrical elements may be mounted in mirror image, as shown in Figure 6. Width of the head-dividing recesses 10 and the space between adjacent elements is arranged to be such that the plant material bridges across them in operation, and ingress, clinging to the spokes and passage between them are prevented. All or part of the head portion may be angled forwardly relative to the plane of the other portions, to collect and retain crop efficiently, particularly when forming windrows.

Mounting portion 6 may take different shapes, depending on the provision for securing the elements to the rotor arms. Particularly suitable for circular rotors are spreading and raking elements whose mounting portion 6 is sufficiently deep fore-and-aft to accommodate transversely extending apertures for fitting the elements over the ends of rotor arms 21, encasing the ends in similar manner to the coils of contemporary metal tines. Such a substantial mounting portion can be adapted further to provide the base for strengthening and support means, like regions of graduated thickness or gusset-shaped fins, extending outward, preferably on the trailing surface of element 1, toward or on to head portion (9) in order to ensure appropriate resistance to yielding along the length of the element. Preferably, the ends of arms 21 and corresponding apertures in mounting portions 6 are shaped to limit relative movement in the mounting region.

There will now be considered, by way of example, some of the important dimensions and general arrangements which are appropriate for the effective operation of the invention. The requirement for treating, moving and/or collecting different forage crops may vary appreciably, depending on crop type, maturity, length, yield, moisture content and other crop-related factors.

Conveniently, the core members of cylindrical rotors may be hollow and cylindrical or polygonal in cross-section. Rotor core diameter may vary preferably between 100 and 500 mm, most preferably between 150 and 350 mm. Direction of rotation is preferably such that the crop engaging elements move upward at the front. The outwardly extending length of crop engaging elements for cylindrical rotors may vary between <100 and 400 mm, preferably between 120 and 250 mm.

Small circular rotors for moving crop material sideways or spreading it may have overall diameters in the region of 0.8 to 1.5 m. They may be provided with 4 to 8 rigid rotor arms. The diameters of large circular rotors for raking may include 8 m, and 8 to 16 rotor arms may be provided. The effective length of crop engaging elements for circular rotors may include 300 and 700 mm.

Preferably, the length of the intermediate stem portion adapted for yielding of crop engaging elements of the invention may measure 0.1 to 0.75 times the overall length of the element.

Depending on the severity and extent of use for which the apparatus is intended, the crop engaging elements may be made of composite material like carbon fibre, or of plastics materials including nylon, polyethylene, polypropylene, polyurethane, or of rubber or combinations of synthetic and natural materials, including fibres.

Preferably, for lifting crop off the ground to deliver it into a harvesting machine, or to return it to the ground without need for substantial physical treatment, the peripheral speed of cylindrical rotors may vary between 6 and 20 m/s. For conditioning forage crops, to increase the rate of drying markedly, peripheral rotor speeds may include 30 m/s.

The transverse mounting angles which crop engaging elements may make relative to a plane containing the transverse rotor axis may include 45° but preferably lie in the range 15° to 30°.

In the foregoing several aspects of the present invention have been referred to and described by way of example. Changes in the details of construction and in the combination and arrangement of parts may be resorted to without departing from the spirit and scope of the invention.

## Claims

1. Apparatus for treating and/or moving cut crop, comprising: a mobile support structure for movement over the ground; one or more rotors (3) mounted for rotation relative to the support structure, each rotor comprising a core member or structure (2) and a plurality of elongate crop engaging elements (1) made of resilient material and secured fixedly to mounting means on the core member or structure (2) by fastening means; drive means for driving each rotor (3) in rotation to engage the crop; and means for controlling crop placement on the ground; characterised in that at least some of said elongate crop engaging elements (1) each comprises a head portion (9) in the outer crop engaging region, a mounting portion (6) for attachment to driven means in the inner region, and a joining stem portion (8) in the intermediate region, at least the outer crop facing region of said head portion (9) being generally planar and wider than said inwardly adjoining stem portion (8) and being aligned to engage the crop substantially broad-ways on in the direction of rotation of each rotor (3).

2. Apparatus according to claim 1 in which said elements (1) during part of each rotation of rotor (3) extend generally normal to the ground and present to the crop outer edges substantially parallel to the ground.

3. Apparatus according to claim 1 in which said crop engaging elements (1) are mounted on cylindrical rotors for rotation in the vertical plane.

4. Apparatus according to claim 1 in which said crop engaging elements (1) are mounted on circular rotors for rotation in the generally horizontal plane.

5. Apparatus according to claim 3 and claim 4 in which at least the outer crop facing edge region of head portion (9) of a crop engaging element (1) is straight or transversely concave.

6. Apparatus according to claim 3 in which the outer edge region of said head portion (9) is notched or otherwise profiled.

7. Apparatus according to claim 3 in which said head portion (9) is divided by at least one inwardly extending incision or recess (10) into two or more parts so that each part is capable of yielding independently.

8. Apparatus according to claim 4 in which head portion (9) of an element (1) is divided by recesses (10) to form substantially flat spokes.

9. Apparatus according to claim 4 in which mounting portion (6) of an element (1) is adapted to fit over, so as to encase, the ends of rotor arms (21) and to provide the base for strengthening and support means extending outward over all or part of the element.

10. Apparatus according to claim 3 and claim 4 in which all or part of a crop engaging element (1) is adapted so as to operate forwardly inclined or reclined relative to a plane containing the rotor axis.

11. Apparatus according to claim 3 and claim 4 in which crop engaging elements (1) are angled so as to operate with one side leading in the direction of movement of the elements.

12. Apparatus according to claim 3 and claim 4 in which the cross-sectional dimensions of elements (1) are adapted to provide required yielding characteristics along the longitudinal extent of the elements.

13. Apparatus according to claim 3 or claim 4 in which the ratio of the width of stem portion (8) to the crop engaging width of head portion (9) of element (1) lies in the range 1:1.2 to 1:4.

14. Apparatus according to claim 3 and claim 4 in which the length of intermediate stem portion (8) of element (1) measures 0.1 to 0.75 times the overall length of the element.

15. Apparatus according to claim 3 in which a transverse crop deflector (16) is provided in crop flow passage (4), said deflector being made of metal or resilient plastics material and comprising one or more flaps, the or each flap being spring-biased or resiliently biased towards rotor (3).

16. Apparatus according to claim 3 in which rotor (3) is mounted relative to a reciprocating mower (12) or a rotary mower in such a way that rotor (3) engages the crop after it is cut by the mower or that rotor (3) first engages also some or all of the crop before it is cut by the mower.

17. A machine for harvesting forage crops incorporating as an intake device an apparatus as claimed in any of claims 1 to 16.

18. A machine for harvesting seed crops incorporating as an intake device an apparatus as claimed in any of claims 1 to 16.

19. A machine for compacting field crops and crop residues incorporating as an intake device an apparatus as claimed in any of claims 1 to 16.

20. A method of treating and/or moving cut crop comprising the steps of: moving through the crop an apparatus according to claim 1 whilst driving one or more rotors (3) for rotation relative to said support structure; moving a plurality of elongate crop engaging elements (1) made of resilient material; engaging the crop with said elements in the direction of movement of the elements; and treating and/or moving the crop by interaction with said elements at least some of which comprise a head portion (9) that is generally planar at least in the outer crop engaging region, is wider than an inwardly adjoining stem portion (8) and is aligned to engage the crop substantially broad-ways on.

21. A method according to claim 23 whereby an apparatus according to claim 3 and claim 18 is used with rotor (3) mounted relative to a reciprocating mower (20) or a rotary mower so that rotor (3) engages the crop after it is cut by the mower or first engages also some or all of the crop before it is cut by the mower.
